# EUROPÄISCHE PATENTSCHRIFT

(11) **EP 1 540 269 B1**
(45) Veröffentlichungstag und Bekanntmachung des Hinweises auf die Patenterteilung: **21.03.2007**
(21) Anmeldenummer: 03798162.8
(22) Anmeldetag: 13.09.2003
(51) Int. Cl.: G01B 5/20, G01B 5/08, G01B 7/28, G01B 7/12

(54) **MESSGERÄT ZUM MESSEN VON VERZAHNUNGEN UND DURCHMESSERN BEI ROTATIONSSYMMETRISCHEN BAUTEILEN**
MEASURING DEVICE FOR MEASURING GEARING AND DIAMETERS IN ROTATIONALLY SYMMETRICAL COMPONENTS
APPAREIL DE MESURE CONCU POUR MESURER DES ENGRENAGES ET DES DIAMETRES DANS DES COMPOSANTS A SYMETRIE DE ROTATION

(30) Priorität: 21.09.2002 DE 10244025
(43) Veröffentlichungstag der Anmeldung: 15.06.2005
(73) Patentinhaber: ZF FRIEDRICHSHAFEN AG, 88038 Friedrichshafen (DE)
(72) Erfinder: LOOSER, Willi, 88085 Langenargen (DE); SCHILLING, Reinhold, 88046 Friedrichshafen (DE)
(86) Internationale Anmeldenummer: PCT/EP2003/010202
(87) Internationale Veröffentlichungsnummer: WO 2004/028669

(56) Entgegenhaltungen:
- DE-C- 4 326 406
- US-A- 2 561 534
- US-A- 2 728 144
- US-A- 3 771 229

## Beschreibung

Die Erfindung betrifft ein Messgerät zum Messen von Verzahnungen und Durchmessern bei rotationssymmetrischen Bauteilen nach der im Oberbegriff von Anspruch 1 näher definierten Art.

Messgeräte zum Messen von Verzahnungen und Durchmessern bei rotationssymmetrischen Bauteilen sind hinlänglich aus dem Stand der Technik bekannt. Mit sogenannten Universal-Messeinrichtungen können Außen- und Innendurchmesser, das Kugelmaß an Außen- und Innenverzahnungen sowie Höhen gemessen werden. Diese Universat-Messeinnchtungen sind hauptsächlich für den Einsatz in Messräumen konzipiert und können für Bauteile mit einem maximalen Durchmesser von ca. 300 mm verwendet werden. Die verwendeten Messgeräte weisen einen festen und einen beweglichen Messtaster auf. Das zu messende Bauteil wird an dem festen Messtaster angelegt und mit Hilfe des beweglichen Messtasters in die Endlage, die Messposition, gebracht. Dies kann manuell oder durch Federkraft erfolgen.

Die aus dem Stand der Technik bekannten Messgeräte sind für große bzw. schwere Bauteile nicht geeignet und erweisen sich unter Werkstattbedingungen als nur bedingt einsatzfähig. Zumeist erfordern sie spezielle Messräume, die von Umgebungseinflüssen weitgehend abgekoppelt sind. Bei großen und schweren Bauteilen schaffen es die beweglichen Messtaster nicht, das Bauteil in die Endlage zu bringen, wodurch es zu Fehlmessungen kommen kann. Weiter besteht die Gefahr, daß sich die Messtaster aufgrund starker mechanischer Belastung verformt werden und somit die Messgeräte häufig repariert werden müssen. Da die Messgeräte häufig nur geringe Hubbewegungen der Messtaster zulassen, kann es beim Einlegen und Herausnehmen, insbesondere bei schweren Bauteilen, zu Beschädigungen kommen.

In der US 3,771,229 ist ein Messgerät zum Messen von Verzahnungen und Durchmessern von rotationssymmetrischen Bauteilen beschrieben, das einen festen Messtaster und einen beweglichen Messtaster besitzt. Der bewegliche Messtaster wird dabei von einer Feder in Richtung des gegenüberliegenden festen Messtasters gebracht

Die US 2,561,534 A1 offenbart ein Messgerät zum Messen von Verzahnungen und Durchmessern von rotationssymmetrischen Bauteilen, wobei eine Feder einen Messtaster in Richtung auf einen festen Messtaster bewegt Der Messtaster drückt das Bauteil gegen den festen Messtaster, so dass das Bauteil in eine definierte Messposition gebracht wird.

Der vorliegenden Erfindung liegt die Aufgabe zugrunde ein Messgerät darzustellen, mit dem das Kugelmaß an Innen- und Außenverzahnungen sowie Außen- und Innendurchmesser von zylindrischen und konischen Bauteile präzise bestimmt werden kann, das zudem robust ausgeführt ist und sich somit für den direkten Einsatz in der Werkstatt eignet. Insbesondere sollen mit dem erfindungsgemäßen Messgerät große und schwere Bauteile überprüft werden können.

Die der Erfindung zugrundeliegende Aufgabe wird durch ein, auch die kennzeichnenden Merkmale des Hauptanspruchs aufweisendes, gattungsgemäßes Messgerät zum Messen von Verzahnungen und Durchmessern bei rotationssymmetrischen Bauteilen gelöst.

Durch eine stabile Ausführung des Messgerätes und der Messtaster können die Bauteile direkt an den Maschinen vermessen werden. Dies ermöglicht eine häufigere Kontrolle bei geringem Kraft- und Zeitaufwand. Das zu prüfende Bauteil kann auf einem Messtisch in Arbeitshöhe abgelegt, und über eine Anhebvorrichtung, die beispielsweise auf dem Wagenheberprinzip beruht, zu den Messtastern geführt werden. Der höhenverstellbare Messtisch weist an seiner Oberfläche Hilfsmittel, wie beispielsweise Rollenkäfige, auf, durch die das zu prüfende Bauteil leicht positioniert werden kann. Das zu prüfende Bauteil muß nicht in eine definierte Messposition gebracht werden, vielmehr wird das Bauteil zunächst nur zwischen den festen und den beweglichem Messtaster gelegt. Durch Aktivierung des eigentlichen Messvorgangs wird das Bauteil von dem beweglichen Messtaster gegen den festen Messtaster in eine definierte Messposition gedrückt. Das Aktivieren kann beispielsweise durch Umlegen eines Hebels erfolgen, der über eine Exzenterscheibe den beweglichen Messtaster positioniert. Dazu drückt ein federkraftbetätigter Mechanismus den beweglichen Messtaster gegen das zu prüfende Bauteil. Die Federkraft, die im folgenden auch als Messkraft bezeichnet wird, kann stufenlos eingestellt und ggf. korrigiert werden. Durch einen großen Hub beim Abheben des beweglichen Messtasters vom Bauteil wird ein leichtes Einlegen und Entnehmen der Bauteile gewährleistet und gleichzeitig Messgerät und Bauteil vor Beschädigungen geschützt. Da der bewegliche Messtaster einen aktiven Messweg aufweist, ist es über den Hauptanwendungsbereich Verzahnungen und Durchmesser zu bestimmen hinaus auch möglich, konische Verzahnungen, Profile, Stufen, Einstiche und Bohrungen zu vermessen. Dafür weist das Messgerät einen Tischhub auf, dessen Länge über Endanschläge fest eingestellt werden kann. Beim Überfahren der Endanschläge wird eine Rutschkupplung aktiviert, die Beschädigungen vorbeugt. Der Tischhub kann über ein Steigungslineal an einer Messuhr abgelesen werden. Die Bewegung des Messtisches kann manuell oder hilfs- bzw. fremdkraftunterstützt erfolgen. Durch die einfache Bedienung und das automatische Positionieren der Bauteile bei der Messung kommt es zu einer Reduzierung von Messunsicherheiten und Messfehlern.

Vorteilhafte und zweckmäßige Ausgestaltungen der Erfindung sind in den Unteransprüchen angegeben. Die Erfindung ist aber nicht auf die Merkmalskombinationen der Ansprüche beschränkt, vielmehr ergeben sich für den Fachmann weitere sinnvolle Kombinationsmöglichkeiten von Ansprüchen und einzelnen Anspruchsmerkmalen aus der Aufgabenstellung.

Nachfolgend wird die Erfindung anhand eines in den Figuren dargestellten Ausführungsbeispieles näher erläutert.
Es zeigen:
- Fig. 1: einen Schnitt durch ein erfindungsgemäßes Messgerätes zum Messen von Verzahnungen und Durchmessern bei rotationssymmetrischen Bauteilen und
- Fig. 2: eine dreidimensionale Ansicht des in Fig. 1 dargestellten erfindungsgemäßen Messgerätes.

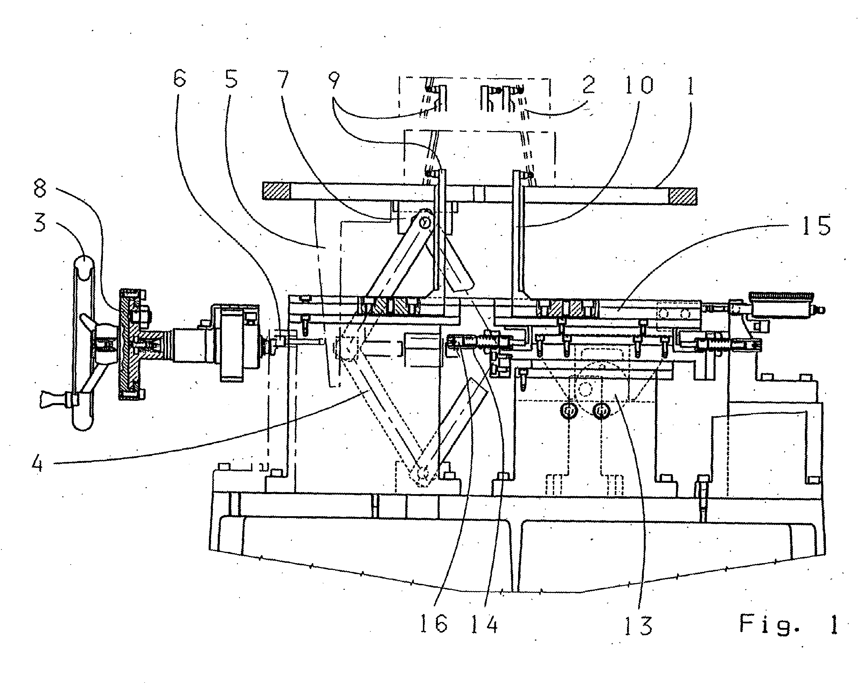

Fig. 1 zeigt ein zu prüfendes Bauteil 2, hier ein Zahnrad mit konischer Innenverzahnung, das auf einem Messtisch 1 angeordnet ist. Über eine Handkurbel 3 wird der Messtisch 1 mit Hilfe einer Anhebvorrichtung 4 , die hier nach dem Hubscherenprinzip arbeitet, auf die notwendige Messhöhe eingestellt. Der Hub des Messtisches 1 kann über ein Steigungslineal 5 an einer Messuhr 6 abgelesen werden. Der Tischhub kann weiterhin auf jede gewünschte Länge mittels Endanschlägen 7 eingestellt werden. Werden diese Endanschläge 7 angefahren, wird eine Rutschkupplung 8 aktiviert, die ein Überfahren der Endanschläge 7 verhindert. Das zu prüfende Bauteil 2 wird zwischen einem festen Messtaster 9 und einem beweglichen Messtaster 10 vorpositioniert. Durch Umlegen eines nicht dargestellten Hebels wird über eine Exzenterscheibe 13 der Messvorgang eingeleitet. Ein federbetätigter Mechanismus 14 drückt den beweglichen Messtaster 10 mit Hilfe einer Vorrichtung 15, die hier als Linearschlitten dargestellt ist, gegen das Bauteil 2 in Messposition. Die Messkraft des federbetätigten Mechanismus ist über eine Schraube 16 stufenlos einstellbar.

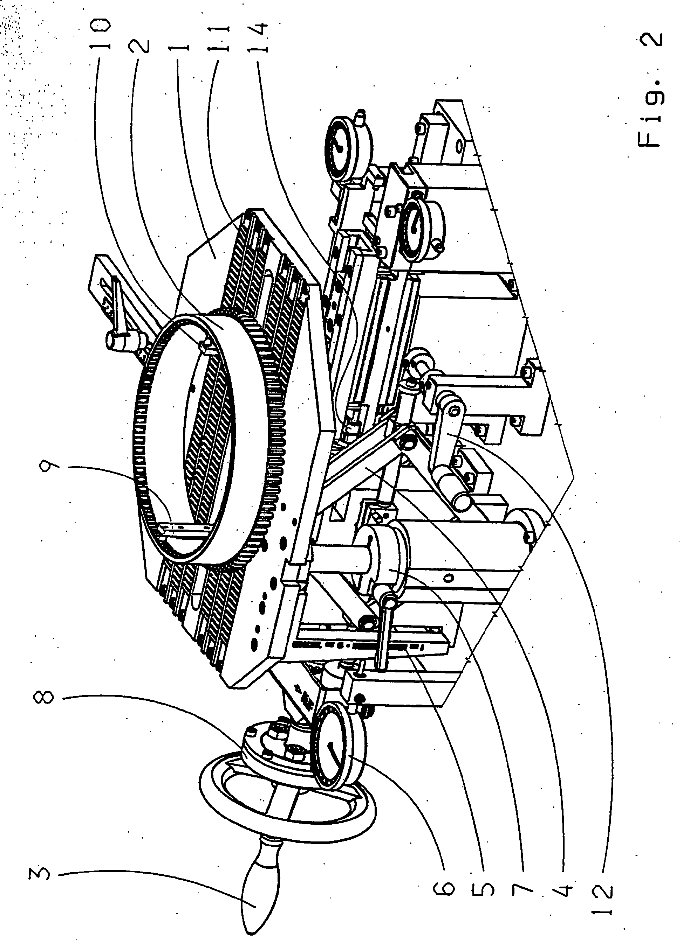

Fig. 2 zeigt das zu prüfende Bauteil 2 auf dem Messtisch 1, das vorpositioniert zwischen dem festen Messtaster 9 und dem beweglichen Messtaster 10 liegt. Das Vorpositionieren wird durch reibungsverringernde Hilfsmittel 11, hier beispielsweise als Rollenkäfige dargestellt, erleichtert, die in dem Messtisch 1 integriert sind. Durch Umlegen eines Hebels 12 wird der eigentliche Messvorgang eingeleitet. Über die Exzenterscheibe 13 wird der federbetätigte Mechanismus 14 aktiv, der mit Hilfe der Federkraft den beweglichen Messtaster 10 in seine Messstellung positioniert. Die Federkraft kann stufenlos über ein Gewinde eingestellt und ggf. korrigiert werden. Der bewegliche Messtaster 10 drückt nach außen und bringt das Bauteil 2 in seine Messposition. Der bewegliche Messtaster 10 kann aufgrund seines aktiven Messweges die Innenkontur abfahren und die Verzahnung des Bauteiles 2 überprüfen. Dazu wird der bewegliche Messtaster 10 in seine Abhebstellung durch erneutes Umlegen des Hebels 12 gebracht, der Messtisch 2 mit Hilfe der Anhebvorrichtung 3 in jeweils verschiedene Messpositionen gebracht und der Messvorgang mehrmals durch wiederholtes Umlegen des Hebels 12 durch Anlegen und Abheben des beweglichen Messtasters 10 aktiviert.

### Bezugszeichen

- 1: Messtisch
- 2: Bauteil
- 3: Handkurbel
- 4: Anhebvorrichtung
- 5: Steigungslineal
- 6: Messuhr
- 7: Endanschlag
- 8: Rutschkupplung
- 9: Fester Messtaster
- 10: beweglicher Messtaster
- 11: Hilfsmittel
- 12: Hebel
- 13: Exzenterscheibe
- 14: federbetätigter Mechanismus
- 15: Vorrichtung
- 16: Schraube

## Patentansprüche

1. Messgerät zum Messen von Verzahnungen und Durchmessern bei rotationssymmetrischen Bauteilen (2) mit einem festen Messtaster (9) und einem beweglichen Messtaster (10), wobei das Bauteil (2) mit Hilfe eines federbetätigten Mechanismus (14), der durch einen Hitfsmechanismus aktiviert wird, von dem beweglichen Messtaster (10) gegen den festen Messtaster (9) gedrückt und somit in eine definierte Messposition gebracht wird, **dadurch gekennzeichnet, dass** der Hilfsmechanismus einen umlegbaren Hebel (12) aufweist, der über eine Exzenterscheibe (13) den beweglichen Messtaster (10) in seiner Messposition positioniert.

2. Messgerät nach Anspruch 1, **dadurch gekennzeichnet, dass** das zu messende Bauteil über eine-mit einem Messtisch (1) verbundene Anhebvorrichtung (4) zu den Messtastern (9, 10) geführt wird.

3. Messgerät nach Anspruch 1, **dadurch gekennzeichnet, dass** der Messtisch (1) an seiner Oberfläche reibungsreduzierende Hilfsmittel (11) aufweist, wodurch das zu prrüfende Bauteil (2) leicht positioniert werden kann.

4. Messgerät nach Anspruch 2, **dadurch gekennzeichnet, dass** die Anhebvorrichtung (4) mindestens einen Endanschlag (7) aufweist, mit dem ein fester Hub eingestellt werden kann.

5. Messgerät nach Anspruch 4, **dadurch gekennzeichnet dass** beim Überfahren des Endanschlags (7) eine Rutschkupplung (8) aktiviert wird, um Beschädigungen vorzubeugen.

6. Messgerät nach Anspruch 2, **dadurch gekennzeichnet, dass** der Hub der Anhebvorrichtung (4) über ein Steigungslineal (5) an einer Messuhr (6) abgelesen werden kann.

7. Messgerät nach Anspruch 2, **dadurch gekennzeichnet, dass** die Bewegung der Arihebvorrichtung (4) manuell oder hilfs- bzw. fremdkraftunterstützt erfolgen kann.

## Claims

1. The invention relates to a measuring device for measuring gearings and diameters on rotationally symmetrical components.(2) by means of a fixed caliper (9) and a movable caliper (10), with the component (2) being pressed against the fixed caliper (9) by the movable caliper (10) with the aid of a spring-actuated mechanism (14), which is activated by means of an auxiliary mechanism, and is thereby brought into a defined measuring position, **characterized in that** the auxiliary mechanism features a movable lever (12), which by means of an eccentric disk (13) puts the movable caliper (10) into its measuring position.

2. A measuring device according to daim 1, **characterized in that** the component to be measured is guided to the calipers (9, 10) by means of a lifting device (4) which is connected to a measuring table (1).

3. A measuring device according to daim 1, **characterized in that** the measuring table (1) features friction-reducing means (11) on its surface, with the aid of which the component (2) to be tested can be easily positioned.

4. A measuring device according to daim 2, **characterized in that** the lifting device (4) features at least one end stop (7), with the aid of which a fixed lift can be set.

5. A measuring device according to daim 4, **characterized in that** if the end stop (7) is overshot, a safety dutch (8) will be activated to prevent damage.

6. A measuring device according to daim 2, **characterized in that** the lift of the lifting device (4) can be read on the gage (6) of an indinometer (5).

7. A measuring device according to daim 2, **characterized in that** the movement of the lifting device (4) can be brought about manually or by power-assisted means.

## Revendications

1. Appareil de mesure destiné à mesurer des dentures et des diamètres sur des composants symétriques de révolution (2), comprenant une touche de mesure fixe (9) et une touche de mesure mobile (10), dans lequel le composant (2) est pressé contre la touche de mesure fixe (9) par la touche de mesure mobile (10) à l'aide d'un mécanisme (14) actionné par ressort qui est activé par un mécanisme auxiliaire, et est ainsi placé dans une position de mesure définie, **caractérisé en ce que** le mécanisme auxiliaire comporte un levier basculant (12) qui positionne la touche de mesure mobile (10) dans sa position de mesure au moyen d'un disque d'excentrique (13).

2. Appareil de mesure selon la revendication 1, **caractérisé en ce que** le composant à mesurer est amené aux touches de mesure (9, 10) au moyen d'un dispositif élévateur (4) relié à une table de mesure (1).

3. Appareil de mesure selon la revendication 1, **caractérisé en ce que** la table de mesure (1) comporte sur sa surface des moyens auxiliaires (11) réduisant le frottement, grâce auxquels le composant (2) à contrôler peut être positionné facilement.

4. Appareil de mesure selon la revendication 2, **caractérisé en ce que** le dispositif élévateur (4) comporte au moins une butée de fin de course (7) à l'aide de laquelle il est possible de régler une course fixe.

5. Appareil de mesure selon la revendication 4, **caractérisé en ce que**, en cas de franchissement de la butée de fin de course (7), un accouplement à glissement (8) est activé pour prévenir les détériorations.

6. Appareil de mesure selon la revendication 2, **caractérisé en ce que** la course du dispositif élévateur (4) peut être lue sur un comparateur (6) avec interposition d'un gabarit de pente (5).

7. Appareil de mesure selon la revendication 2, **caractérisé en ce que** le déplacement du dispositif élévateur (4) peut s'effectuer manuellement ou avec assistance par une force auxiliaire ou par une force extérieure.
